# EUROPÄISCHE PATENTSCHRIFT

(11) **EP 3 486 878 B1**
(45) Veröffentlichungstag und Bekanntmachung des Hinweises auf die Patenterteilung: **05.10.2022**
(21) Anmeldenummer: 18000904.5
(22) Anmeldetag: 16.11.2018
(51) Int. Cl.: G07C 9/00

(54) **SCHLIESSSYSTEM UND VERFAHREN ZUM SCHLIESSEN EINES CONTAINERS**
LOCKING SYSTEM AND METHOD FOR LOCKING A CONTAINER
SYSTÈME DE VERROUILLAGE ET PROCÉDÉ DE VERROUILLAGE D'UN CONTAINER

(30) Priorität: 20.11.2017 DE 102017010735
(43) Veröffentlichungstag der Anmeldung: 22.05.2019
(73) Patentinhaber: Scan Global Logistics Commercial GmbH, 85416 Langenbach (DE)
(72) Erfinder: Wegener, Norbert, D-84036 Kumhausen (DE); Heier, Stefan, D-86554 Pöttmes (DE); Foltyn, Peter, D-86391 Stadtbergen (DE)
(74) Vertreter: Kuhnen & Wacker Patent- und Rechtsanwaltsbüro PartG mbB

(56) Entgegenhaltungen:
- WO-A1-2010/019040
- WO-A1-2017/174813
- US-A1- 2013 063 248
- US-A1- 2013 335 193
- US-A1- 2016 284 149

## Beschreibung

Die Erfindung betrifft ein Schließsystem für einen Container, gemäß dem Oberbegriff des Anspruchs 1 sowie ein entsprechendes Verfahren zum Verschließen eines Containers gemäß dem Oberbegriff des Anspruchs 7.

Ein solches Schließsystem für einen Container weist einen Aktuator zum Betätigen eines Schließbolzens auf, wobei der Aktuator bevorzugt elektrisch bzw. magnetisch, d.h. elektromechanisch, betrieben werden kann und so auf den Schließbolzen wirkt, wobei der Schließbolzen mit einem entsprechenden Gegenpart, meistens einer Öffnung zum Eingriff und entsprechenden Verschließen zusammenwirkt. Ein Container-Schließencontroller ist zur Ansteuerung des Aktuators vorgesehen. Im Stand der Technik sind entsprechende Schließsysteme für Container bereits beispielsweise für LKW-Sattelaufleger schon im Einsatz.

Beim Einsatz entsprechender Schließsysteme in Frachtcontainern, insbesondere in Luftfrachtcontainern, welche für Fahrzeuge vorgesehen sind, besteht eine grundlegende Problematik darin, entsprechende Schließsysteme ausreichend sicher zu gestalten. Insbesondere im Bereich des Versendens von Fahrzeuge in solchen Containern ist sicherzustellen, dass insbesondere Prototypen oder spezielle Rennfahrzeuge vor dem Zugriff Unberechtigter zuverlässig geschützt sind. Das Mitversenden von Schlüsseln oder offenen Pin-Codes in den Frachtpapieren zusammen mit einem solchen Container ergibt ein mögliches Sicherheitsrisiko dahingehend, dass nicht ohne Weiteres gewährleistet ist, dass unberechtigte Personen sich die Codes bzw. Schlüssel aneignen und einen entsprechenden Container unberechtigterweise öffnen können.

Im Bereich von Containern, welche fest auf Lastkraftwagentrailern fixiert sind, gibt es bereits einen Ansatz dahingehend, Sicherheitscodes zum Öffnen und Schließen solcher Container über Telekommunikationseinrichtungen zu verschicken, so dass ein Öffnen nur mit gesendeten und korrekten Sicherheitscodes erfolgen kann. Insbesondere im Bereich der Luftfrachtcontainer ist dies allerdings nicht anwendbar, da sichergestellt sein muss, dass zumindest im Flugbetrieb jegliche Kommunikationseinrichtungen deaktiviert sind.

Die US-Veröffentlichung US 2016/284149 A1 beschreibt ein Transportverfahren sowie einen dazu vorgesehenen abschließbaren Transportcontainer, welcher einen Lese- und Empfangsmechanismus aufweist, sowie eine optische Lesevorrichtung, um biometrische Information einer Bedienperson zu erfassen. Dabei kommt unter anderem auch ein zentrales Control Center zum Einsatz, welches Schließencode erzeugt und zur Kommunikationseinrichtung des Containers übermittelt.

Die internationale Veröffentlichung WO 2017/174813 A1 beschreibt ein Gepäckstück, welches über ein Smartdevice mittels eines Elektronikmoduls mit dem Smartdevice kommunizieren kann, wobei in einem Flugmodus keine Kommunikation stattfindet.

Die US Veröffentlichung US 201370063248 A1 beschreibt einen internen Schließenmechanismus, bei welchem elektromechanische Verschließeinrichtungen zum Sperren und Entsperren vorgesehen sind.

Das Dokument WO 2010/019040 A1 beschreibt ein Verschlusssystem zum Einsatz im Flugverkehr, bei welchem die Datenübertragung durch einen äußeren Kommunikationscode aktivierbar ist. Dort wird kein Abgleich zwischen einem unmittelbar von einem Zentralkontroller empfangenen Schließencode und einem von außen erfassten Schließencode vorgenommen. Vielmehr ist dort der Schließencode schon fix im Verschluss gespeichert oder wird beim Schließen unveränderbar erzeugt.

Es ist daher die Aufgabe der vorliegenden Erfindung ein Schließsystem für einen Container, einen Frachtcontainer, insbesondere einen Luftfrachtcontainer speziell für den Versand von Fahrzeugen, vorzusehen, welches die Nachteile des Standes der Technik überwindet und insbesondere ein Schließsystem für einen Container vorzusehen, welches sicher, leicht handhabbar und auch für den Flugbetrieb flexibel einsetzbar ist. Dies betrifft auch ein erfindungsgemäßes Verfahren zum Verschließen (und Öffnen) eines entsprechenden Containers.

Gelöst wird diese Aufgabe mit dem Gegenstand des unabhängigen Anspruchs 1 bzw. des nebengeordneten Anspruchs 7. Vorteilhafte Weiterbildungen der Erfindung ergeben sich aus den anhängigen Ansprüchen

Das erfindungsgemäße Schließsystem ist zusammen mit einem Container vorgesehen, mit einem Aktuator zum Betätigen eines Schließbolzens, welcher mit einer Verschlussöffnung entsprechend zusammenwirkt, um ein Verschließen bzw. Öffnen des Containers mit dem erfindungsgemäßen Schließsystem zu ermöglichen, wobei ein Container-Schließencontroller zur Ansteuerung des Aktuators vorgesehen ist. Erfindungsgemäß ist weiterhin eine Container-Kommunikationseinrichtung vorgesehen, welche dem Container-Schließencontroller zugeordnet ist, zum Empfang eines Schließen-Codes. Ferner ist eine Kamera-Container-Codeerfassungseinrichtung zur Erfassung eines Schließencodes vorgesehen. Der Container-Schließencontroller ist dabei so vorgesehen, dass dieser einen Vergleich von empfangenem und erfasstem Schließencode ausführt bei übereinstimmend korrektem Schließencode den Aktuator betätigt, um den Container über den Schließbolzen zu verschließen bzw. zu öffnen. Ferner ist erfindungsgemäß ein Zentralcontroller vorgesehen, der den Schließencode erzeugt und über ein einwählbares Kommunikationsnetzwerk an die Containerkommunikationseinrichtung übermittelt. Ferner ist erfindungsgemäß ein Kommunikationscode vorgesehen und über die Containercodeerfassungseinrichtung dem Container-Schließen-Controller so zuführbar, dass über diesen Kommunikationscode die ContainerKommunikationseinrichtung aktivierbar ist. Gegebenenfalls kann auch eine Deaktivierung über einen entsprechenden Kommunikationscode vorgenommen werden.

Erfindungsgemäß ist mit dem Schließsystem für einen Container somit sichergestellt, dass beispielsweise bei einem Luftfrachtcontainer im Flugbetrieb die Container-Kommunikationseinrichtung deaktiviert ist und erst bei Bedarf aktivierbar ist, so dass erst dann die entsprechenden Codes übermittel werden, um eine größtmögliche Sicherheit durch Vergleich von erfasstem und empfangenen Schließencode am jeweiligen Bestimmungsort des Containers vorzusehen. Dabei kann beispielsweise bevorzugt der Kommunikationscode z.B. auch schon vorab im Container-Schließencontroller gespeichert sein. Auch kann der Empfang des empfangenen Schließencodes zur Abspeicherung im Container-Schließencontroller bereits vorab in einem Lernschritt vorgenommen sein.

Für eine größtmögliche Sicherheit und Flexibilität des erfindungsgemäßen Schließsystems ist gemäß einer Ausführungsform davon vorgesehen, dass der Schließencode und der Kommunikationscode mittels dem einwählbaren Kommunikationsnetzwerk übermittelt sind und über ein mobiles Endgerät abrufbar sind. Über den Abruf des mobilen Endgeräts im Zusammenwirken mit der Kamera-ContainerCodeerfassungseinrichtung wird der erfasste Schließencode mit dem empfangenen Schließencode abgleichbar dem Container-Schließencontroller zugeführt.

Bevorzugt erfasst dabei die Container-Codeerfassungsvorrichtung den Schließencode und/oder den Kommunikationscode über eine Anzeige des mobilen Endgeräts. Die Kamera-Container-Codeerfassungseinrichtung ist eine Kamera.

Das mobile Endgerät kann bevorzugt ein Handy mit einer entsprechenden App zur Anzeige von zu erfassendem Schließencode und Kommunikationscode sein.

Besonders sicher ist erfindungsgemäß, wenn der Schließencode und/oder der Kommunikationscode entsprechende QR-Codes sind.

Um die zuverlässige Schließung und/oder Öffnung eines Containers am Zielort sicher zu gewährleisten kann bei dem erfindungsgemäßen Schließsystem bevorzugt eine Notschließvorrichtung vorgesehen sein, welche ein Schließen und Öffnen des Containers bei Ausfall des einwählbaren Kommunikationsnetzwerks erlaubt, mittels beispielsweise eines Ziffernblocks, der die Eingabe eines numerischen Not-Schließen-Codes erlaubt. Ein entsprechend numerischer Not-Schließen-Code kann beispielsweise bevorzugt im Container-Schließen-Controller in einem Lernschritt vorab abgelegt sein. Somit ist sichergestellt, dass auch an Zielorten, wo kein einwählbares Kommunikationsnetzwerk zur Verfügung steht, der Container mit dem erfindungsgemäßen Schließsystem zuverlässig geöffnet bzw. verschlossen werden kann.

Bevorzugt handelt es sich bei dem einwählbaren Kommunikationsnetzwerk um ein Mobilfunknetz, welches weltweit inzwischen im Wesentlichen flächendeckend weitgehend vorgesehen ist.

Beim erfindungsgemäßen Verfahren zum Schließen eines Containers wird ein Schließsystem für den Container bereitgestellt mit einem Aktuator, der einen Schließbolzen betätigt, und mit einem Container-Schließencontroller zur Ansteuerung des Aktuators. Erfindungsgemäß ist eine Containerkommunikationseinrichtung vorgesehen, welche dem Container-Schließencontroller zugeordnet ist, so dass nach Empfang eines Schließencodes durch die Container-Kommunikationseinrichtung bei Erfassung eines Schließencodes über eine Kamera-Container-Codeerfassungseinrichtung und Vergleich von empfangenem, erfassten und übereinstimmend korrekten Schließencode der Aktuator betätigt wird, wobei ein Zentralcontroller den Schließencode erzeugt (bevorzugt sowohl den empfangenen als auch den erfassten Schließencode) und über ein einwählbares Kommunikationsnetzwerk an die Container-Kommunikationseinrichtung übermittelt. Die Container-Kommunikationseinrichtung wird über einen Kommunikationscode aktiviert, der über die Kamera-Container-Codeerfassungseinrichtung dem Container-Schließencontroller zugeführt wird.

Mit dem erfindungsgemäßen Verfahren, wie auch mit der erfindungsgemäßen Vorrichtung, ist somit ein sicheres Schließen und Öffnen eines entsprechenden Containers weitgehend abgesichert vor unauthorisierten Zugriffen durch Dritte möglich, wobei gleichzeitig erfindungsgemäß sichergestellt ist, dass ein Container mit einem solchen Schließsystem unter Anwendung des erfindungsgemäßen Verfahrens auch im Bereich der Luftfracht problemlos einsetzbar ist.

Mit der erfindungsgemäßen Vorrichtung ist das erfindungsgemäße Verfahren entsprechend ausführbar.

Die Erfindung wird im Folgenden anhand der beispielhaft erläuterten Ausführungsformen näher beschrieben werden.

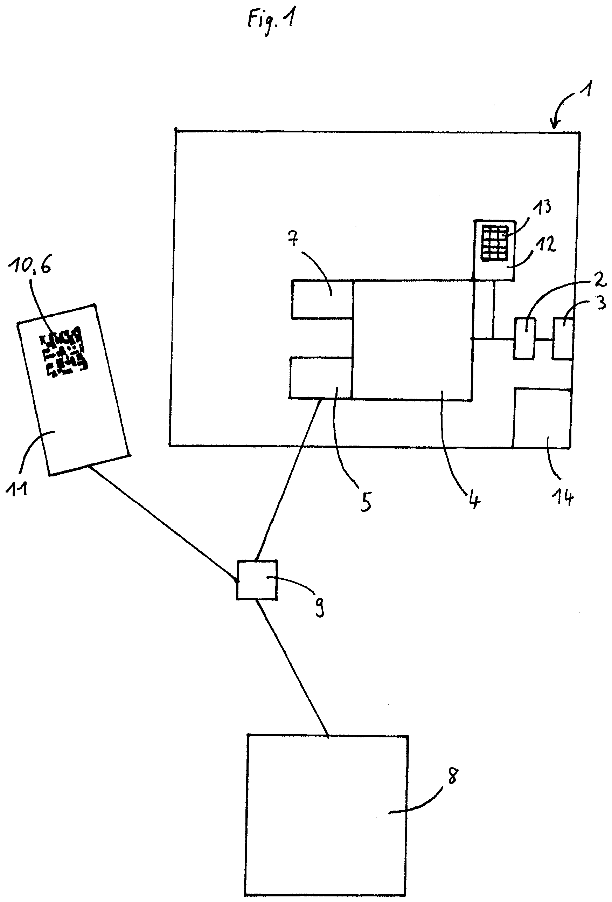

- Figur 1: zeigt eine schematische Ansicht eines Schließsystem für einen Container gemäß einer Ausführungsform der Erfindung.

Figur 1 zeigt eine schematische Ansicht eines Schließsystems für einen Container gemäß einer Ausführungsform der Erfindung.

Der Container 1 weist einen Aktuator 2 zum Betätigen eines Schließbolzens 3 auf, welcher mit einer entsprechenden Schließöffnung des Containers 1 zusammenwirkt, um einen Verschluss bzw. ein Öffnen des Containers 1 entsprechend zu ermöglichen. Der Container 1 weist ferner einen Container-Schließencontroller 4 zur Ansteuerung des Aktuators 2 auf. Im Container integriert ist eine Batterie 14 zur Energieversorgung des erfindungsgemäßen Schließsystems.

Eine Container-Kommunikationseinrichtung 5 ist vorgesehen, welche dem Container-Schließencontroller 4 zugeordnet ist, zum Empfang eines Schließencodes 6, und eine Kamera-Container-Codeerfassungseinrichtung 7, ausgebildet als Kamera, ist zur Erfassung eines Schließencodes 6 vorgesehen. Der Container-Schließencontroller 4 ist so vorgesehen, dass dieser einen Vergleich von empfangenem und erfasstem Schließencode 6 ausführt und bei übereinstimmend korrektem Schließencode 6 den Aktuator 2 zum Öffnen bzw. Schließen des Containers 1 betätigt. Ein Zentralcontroller 8 ist vorgesehen, der den Schließencode 6 erzeugt und über ein einwählbares Kommunikationsnetzwerk 9, bevorzugt ein Mobilfunknetz, an die Containerkommunikationseinrichtung 5 übermittelt. Ein Kommunikationscode 10 ist ferner vorgesehen und wird über die Kamera-Container-Codeerfassungseinrichtung 7 dem Container-Schließencontroller zugeführt, so dass über diesen die Container-Kommunikationseinrichtung 5 am Zielort beispielsweise entsprechend erfindungsgemäß aktivierbar ist. Der Schließencode 6 und der Kommunikationscode 10 werden ferner mittels dem einwählbaren Kommunikationsnetzwerk 9 übermittelt und über ein mobiles Endgerät 11 abrufbar auch dargestellt. Es handelt sich dabei bevorzugt um QR-Codes, welche von der als Kamera ausgeführten Kamera-Container-Codeerfassungseinrichtung 7 über die Anzeige des mobilen Endgeräts 11 erfasst werden.

Zur Notöffnung steht eine Notschließvorrichtung 12 zur Verfügung, welche ein Schließen und Öffnen des Containers 1 bei Ausfall des einwählbaren Kommunikationsnetzwerks 9 erlaubt, mittels eines Zifferblocks 13, der die Eingabe eines numerischen Notschließencodes erlaubt.

Neben dem Einsatz von QR-Codes, welche mittels einer Kamera als Containercodeerfassungseinrichtung 7 erfassbar sind, können gegebenenfalls auch zumindest als Kommunikationscode RFID-Chips mit einem entsprechenden Lesegerät anstelle der Kamera die Container-Kommunikationseinrichtung aktivieren. Dies erlaubt eine technisch noch einfachere Umsetzung der Aktivierung der Containerkommunikation mit der Information, bereitgestellt über den Zentralcontroller 8 mittels des einwählbaren Kommunikationsnetzwerks 9.

Obwohl zumindest beispielhafte Ausführungsformen in der vorhergehenden Beschreibung gezeigt wurden, können verschiedene Änderungen und Modifikationen vorgenommen werden. Die genannte Ausführungsform ist lediglich beispielhaft und nicht dazu vorgesehen, den Gültigkeitsbereich, die Anwendbarkeit oder die Konfiguration des Schließsystem in irgendeiner Weise zu beschränken. Vielmehr stellt die vorhergehende Beschreibung dem Fachmann einen Plan zur Umsetzung zumindest einer beispielhaften Ausführungsform des Schließsystems zur Verfügung, wobei zahlreiche Änderungen in der Funktion und der Konstruktion des Schließsystems von in der beispielhaften Ausführungsform beschriebenen Komponenten gemacht werden können, ohne den Schutzbereich der angefügten Ansprüche und ihrer rechtlichen Äquivalente zu verlassen.

Gültigkeitsbereich, die Anwendbarkeit oder die Konfiguration des Schließsystem in irgendeiner Weise zu beschränken. Vielmehr stellt die vorhergehende Beschreibung dem Fachmann einen Plan zur Umsetzung zumindest einer beispielhaften Ausführungsform des Schließsystems zur Verfügung, wobei zahlreiche Änderungen in der Funktion und der Konstruktion des Schließsystems von in der beispielhaften Ausführungsform beschriebenen Komponenten gemacht werden können, ohne den Schutzbereich der angefügten Ansprüche und ihrer rechtlichen Äquivalente zu verlassen.

## Patentansprüche

1. Schließsystem für einen Container (1) mit einem Aktuator (2) zum Betätigen eines Schließbolzens (3), und mit einem Container-Schließkontroller (4) zur Ansteuerung des Aktuators (2),
wobei eine Container-Kommunikationseinrichtung (5) vorgesehen ist, welche dem Container-Schließenkontroller (4) zugeordnet ist, zum Empfang eines Schließencodes (6), und eine Kamera-Container-Codeerfassungseinrichtung (7) zur Erfassung eines Schließencodes (6) vorgesehen ist, und dass der Container-Schließencontroller (4) so vorgesehen ist, dass dieser einen Vergleich von empfangenem und erfasstem Schließencode (6) ausführt und bei übereinstimmend korrektem Schließencode (6) den Aktuator (2) betätigt, und dass ein Zentralkontroller (8) vorgesehen ist, der den Schließencode (6) erzeugt und über ein einwählbares Kommunikationsnetzwerk (9) an die Container-Kommunikationseinrichtung (5) übermittelt,
**dadurch gekennzeichnet, dass**
ein Kommunikationscode (10) vorgesehen ist und über die Kamera-Container-Codeerfassungseinrichtung (7) dem Container-Schließkontroller (4) zugeführt ist, so dass über diesen die Container-Kommunikationseinrichtung (5) aktivierbar ist.

2. Schließsystem nach Anspruch 1, **dadurch gekennzeichnet, dass** der Schließencode (6) und der Kommunikationscode (10) mittels dem einwählbaren Kommunikationsnetzwerk (9) übermittelt sind und über ein mobiles Endgerät (11) abrufbar sind.

3. Schließsystem nach Anspruch 1 oder 2, **dadurch gekennzeichnet, dass** ist die Kamera-Container-Codeerfassungseinrichtung (7) den Schließencode (6) und den Kommunikationscode (10) über eine Anzeige des mobilen Endgeräts (11) erfasst.

4. Schließsystem nach einem der Ansprüche 1 bis 3, **dadurch gekennzeichnet, dass** der Schließenkode (6) und/oder der Kommunikationskode (10) QR-Codes sind.

5. Schließsystem nach einem der vorangehenden Ansprüche, **dadurch gekennzeichnet, dass** ein Notschließenvorrichtung (12) vorgesehen ist, welche ein Schließen und Öffnen des Containers (1) bei Ausfall des einwählbaren Kommunikationsnetzwerks (9) erlaubt, mittels eines Ziffernblocks (13), der die Engabe eines nummerischen Not-Schließencodes erlaubt.

6. Schließsystem nach einem der vorangehenden Ansprüche, **dadurch gekennzeichnet, dass** das einwählbare Kommunikationsnetzwerk (9) ein Mobilfunknetz ist.

7. Verfahren zum Schließen eines Containers, durch Bereitstellen eines Schließsystems für den Container mit einem Aktuator, der einen Schließbolzen betätigt, und mit einem Container-Schließkontroller zur Ansteuerung des Aktuators,
wobei eine Container-Kommunikationseinrichtung vorgesehen ist, welche dem Container-Schließkontroller zugeordnet ist,
**dadurch gekennzeichnet, dass**
die Container-Kommunikationseinrichtung über einen Kommunikationscode aktiviert wird, der über eine Kamera-Container-Codeerfassungseinrichtung dem Container-Schließkontroller zugeführt wird, so dass nach Empfang eines Schließencodes
durch die Container-Kommunikationseinrichtung, bei Erfassung eines Schließencodes über die Kamera-Container-Codeerfassungseinrichtung und Vergleich von empfangenem, erfasstem und übereinstimmend korrektem Schließencode der Aktuator betätigt wird, wobei ein Zentralkontroller den Schließencode erzeugt und über ein einwählbares Kommunikationsnetzwerk an die Container-Kommunikationseinrichtung übermittelt.

## Claims

1. A locking system for a container (1) having an actuator (2) for actuating a locking bolt (3), and having a container locking controller (4) for controlling the actuator (2),
wherein a container communications device (5), which is associated with the container locking controller (4), is provided for receiving a locking code (6), and a camera container code acquisition device (7) is provided for acquisition of a locking code (6), and wherein the container locking controller (4) is provided such that it performs a comparison of received and acquired locking codes (6) and, in the event of a correct, matching locking code (6), actuates the actuator (2), and wherein a central controller (8) is provided that generates the locking code (6) and transmits it to the container communications device (5) through a dial-up communications network (9),
**characterized in that**
a communications code (10) is provided and is delivered to the container locking controller (4) by means of the camera container code acquisition device (7) in such a manner that the container communications device (5) can be activated thereby.

2. The locking system according to claim 1, **characterized in that** the locking code (6) and the communications code (10) are transmitted by means of the dial-up communications network (9) and can be retrieved by means of a mobile device (11).

3. The locking system according to claim 1 or 2, **characterized in that** the camera container code acquisition device (7) acquires the locking code (6) and the communications code (10) through a display of the mobile device (11).

4. The locking system according to one of claims 1 to 3, **characterized in that** the locking code (6) and/or the communications code (10) are QR codes.

5. The locking system according to one of the preceding claims, **characterized in that** an emergency operating device (12) is provided, that permits closing and opening of the container (1) in the event of failure of the dial-up communications network (9) by means of a numeric keypad (13) that permits entry of a numeric emergency locking code.

6. The locking system according to one of the preceding claims, **characterized in that** the dial-up communications network (9) is a cellular network.

7. A method for locking a container, by providing a locking system for the container having an actuator that actuates a locking bolt, and having a container locking controller for controlling the actuator,
wherein a container communications device is provided that is associated with the container locking controller,
**characterized in that**
the container communications device is actuated by a communication code which is delivered to the container locking controller through a camera container code acquisition device so that after reception of a locking code by the container communication device, upon acquisition of a locking code through the camera container code acquisition device and comparison of matching and correct received and acquired locking codes, the actuator is actuated, wherein a central controller generates the locking code and transmits it to the container communications device through a dial-up communications network.

## Revendications

1. Système de verrouillage d'un conteneur (1) avec un actionneur (2) pour actionner un verrou (3) ainsi qu'un contrôleur de verrouillage de conteneur (4) pour commander l'actionneur (2),
- une installation de communication de conteneur (5) associée au contrôleur de verrouillage de conteneur (4) pour recevoir un code de verrouillage (6) et une installation de caméra de saisie de code de conteneur (7) pour saisir un code de verrouillage (6) et le contrôleur de verrouillage de contrôleur (4) est prévu pour comparer le code de verrouillage (6) reçu et saisi et en cas de concordance pour un code de verrouillage (6) correct, activer l'actionneur (2), et
- un contrôleur central (8) qui génère le code de verrouillage (6) et le transmet par un réseau de communication sélectionné (9) à l'installation de communication de conteneur (5),
système **caractérisé par**
- un code de communication (10) et qui est transmis au contrôleur de verrouillage de contrôleur (4) par l'installation de caméra de saisie de code de conteneur (7) pour qu'il active l'installation de communication de conteneur (5).

2. Système de verrouillage selon la revendication 1,
**caractérisé en ce que**
le code de verrouillage (6) et le code de communication (10) sont transmis par un réseau de communication (9) sélectionné et ils peuvent être appelés par un terminal mobile (11).

3. Système de verrouillage selon la revendication 1 ou 2,
**caractérisé en ce que**
la caméra de l'installation de saisie de code de conteneur (7) saisit le code de verrouillage (6) et le code de communication (10) par un affichage du terminal mobile (11).

4. Système de verrouillage selon l'une des revendications 1 à 3, **caractérisé en ce que**
le code de verrouillage (6) et/ou le code de communication (10) sont des QR-codes.

5. Système de verrouillage selon l'une des revendications précédentes, **caractérisé par**
un dispositif de verrouillage de secours (12) qui permet le verrouillage et le déverrouillage du conteneur (1) en cas de défaillance du réseau de communication sélectionné (9), par un bloc de chiffres (13) qui permet l'entrée d'un code numérique de verrouillage de secours.

6. Système de verrouillage selon l'une des revendications précédentes, **caractérisé en ce que**
le réseau de communication sélectionné (9) est un réseau de téléphonie mobile.

7. Procédé de verrouillage d'un conteneur avec un système de verrouillage du conteneur comprenant :
- un actionneur qui actionne un verrou et un contrôleur de verrouillage de conteneur pour activer l'actionneur,
- une installation de communication de conteneur associée au contrôleur de verrouillage de conteneur,
procédé **caractérisé en ce que**
- l'installation de communication de conteneur est activée par un code de communication fourni par une caméra d'installation de saisie de code de conteneur pour le contrôleur de verrouillage de conteneur de façon à ce qu'après la réception d'un code de verrouillage par l'installation de communication de conteneur, à la saisie d'un code de verrouillage par la caméra de l'installation de saisie de code de conteneur et par comparaison du code de verrouillage reçu, saisi et correspondant correctement, on active l'actionneur, un contrôleur central générant le code de verrouillage et le transmettant à l'installation de communication de conteneur par un réseau de communication sélectionné.
